# EUROPÄISCHE PATENTSCHRIFT

(11) **EP 2 812 266 B1**
(45) Veröffentlichungstag und Bekanntmachung des Hinweises auf die Patenterteilung: **05.08.2015**
(21) Anmeldenummer: 13707564.4
(22) Anmeldetag: 05.02.2013
(51) Int. Cl.: B65G 47/91, B65G 47/84

(54) **TRANSFERVORRICHTUNG, TRANSFERSYSTEM SOWIE VERFAHREN**
TRANSFERRING DEVICE, TRANSFERRING SYSTEM, AND METHOD
DISPOSITIF ET SYSTÈME DE TRANSFERT ET PROCÉDÉ CORRESPONDANT

(30) Priorität: 09.02.2012 DE 102012101076
(43) Veröffentlichungstag der Anmeldung: 17.12.2014
(73) Patentinhaber: Mall Herlan MB GmbH, 78579 Neuhausen ob Eck (DE)
(72) Erfinder: LUZ, Uwe, 78579 Neuhausen ob Eck (DE); REICH, Uwe, 78532 Tuttlingen (DE)
(74) Vertreter: Wagner, Kilian
(86) Internationale Anmeldenummer: PCT/EP2013/052204
(87) Internationale Veröffentlichungsnummer: WO 2013/117528

(56) Entgegenhaltungen:
- EP-A1- 0 119 496
- CH-A5- 678 616
- DE-A1- 3 100 792
- DE-A1- 4 333 186
- DE-A1- 10 249 571
- DE-A1-102005 011 130
- DE-A1-102009 029 778
- US-A- 5 051 268
- US-A- 5 344 202
- US-B1- 7 017 961

## Beschreibung

Die Erfindung betrifft eine Transfervorrichtung, vorzugsweise eine Dosentransfervorrichtung, insbesondere für Dosen oder Dosenrohlinge zur Übergabe oder Übernahme von Dosen, Dosenrohlingen oder sonstigen Behältnissen gemäß dem Oberbegriff des Anspruchs 1, ein Transfersystem mit mindestens einer solchen Transfervorrichtung gemäß Anspruch 10 sowie ein Verfahren zum Transferieren von Dosen Dosenrohlingen oder sonstigen Behältnissen gemäß dem Oberbegriff des Anspruchs 12.

Eine bekannte Dosentransfervorrichtung nach dem Oberbegriff des Anspruchs 1 ist in DE 10 2009 029 778 A1 der Anmelderin beschrieben. Bei der bekannten Dosentransfervorrichtung handelt es sich um eine sogenannte Vakuumtrommel mit mehreren in Umfangsrichtung nebeneinander angeordneten, prismenförmigen Dosenaufnahmen, die in Abhängigkeit von der Umfangsposition parallel zur Drehachse der Vakuumtrommel verstellbar sind, um Dosen von Kettenstiften einer ersten Transportkette übernehmen und an Dosenaufnahmen einer weiteren Vakuumtrommel übergeben zu können. Um die Dosen auf Kettenstifte einer Transportkette übergeben oder von diesen übernehmen zu können und um die Dosen bzw. Dosenrohlinge während des Transportes entlang des Transportweges um die Drehachse in Umfangsrichtung zu halten sind Ansaugmittel vorgesehen, um die Dosen bzw. Dosenrohlinge mit Unterdruck beaufschlagen, d.h. durch Saugen festhalten zu können. Während der Übergabe einer Dose bzw. eines Dosenrohlings von einer Dosenaufnahme einer ersten Vakuumtrommel an eine synchronisiert laufende Dosenaufnahme einer benachbarten zweiten Transfervorrichtung ist die Dose bzw. ist der Dosenrohling eine zeitlang ungeführt bzw. befindet sich in einem Flugzustand, nachdem der Unterdruck der Ansaugmittel der ersten Vakuumtrommel nachlässt, die Dose von den Ansaugmitteln der zweiten Vakuumtrommel angesaugt wird, die Dose jedoch noch nicht an der Dosenaufnahme der zweiten Vakuumtrommel anliegt. Während dieses Übergabezeitpunktes bei der die Dose senkrecht zur Drehachse der Vakuumtrommel verstellt wird, kann es vorkommen, dass die Dose nicht korrekt eingefangen wird, nach unten fällt und/oder verkantet bzw. verloren geht. Besonders problematisch wird die Übergabe während des sogenannten Lückenfüllens von Dosen, da in diesem Fall die beiden Vakuumtrommeln nicht die gesamte Zeit über synchron laufen, sondern eine der Vakuumtrommeln in einem Takt sowohl beschleunigt wird, die Übergabe erfolgt und dann wieder abgebremst wird. Hierdurch verringert sich die Synchronlaufzeit auf etwa die Hälfte gegenüber dem andauernden Synchronlauf, wodurch es zu einer höheren Fehlübergaberate kommt. Erschwert wird diese Problematik durch die Bestrebungen einer immer kürzeren Taktzahl, d.h. nach erhöhten Dosen-Durchsatzzahlen.

Aus der DE 10 2004 013 444 A1 sind eine Vorrichtung und ein Verfahren zum Transportieren und Transferieren von Zigaretten bekannt, wobei die Zigaretten von einer Transfervorrichtung entlang eines Transportweges transportiert und senkrecht hierzu entlang einer Übergabeachse übergeben werden. Zum Übergeben der Zigaretten sind mit Vakuum beaufschlagbare, verschwenkbare Aufnahmen vorgesehen, die während einer Verdrehbewegung der Transfervorrichtung von radial innen nach radial außen verschwenkbar sind. Die bekannte Transfervorrichtung ist grundsätzlich nicht zur Übergabe von Dosen oder Dosenrohlingen geeignet, da die zu übergebenden Gegenstände ungepuffert in der Aufnahme aufgenommen sind bzw. da die Übergabe ungepuffert erfolgt, was im Falle von Dosen oder Dosenrohlingen eine Beschädigung der Oberfläche zur Folge hätte. Die bekannte Vorrichtung ist nur zur Übergabe vergleichsweise weicher bzw. kompressibler Gegenstände wie Zigaretten geeignet. Darüber hinaus wären die bewegten Massen im Falle der Ausbildung der bekannten Transfervorrichtung zur Übergabe von Dosen aufgrund des Vorsehens der Verschwenkmechanismen so groß, dass die Taktzahl sehr begrenzt wäre. Ferner ist die Konstruktion aufwendig, vergleichsweise träge und die Übergabe muss über entsprechende Kulissenführungen zwangsgesteuert ausgeführt werden.

Aus der DE 31 00 792 A1 ist eine Transfervorrichtung von Tuben bekannt, bei der zur Zentrierung der Tuben in Aufnahmetaschen Saugleitungsöffnungen vorgesehen sind. Anders ausgedrückt, wird die Lage der Tuben relativ zu Kettenstiften über Unterdruckbeaufschlagung fixiert. Die Übergabe erfolgt entlang der Längsachse der Tube durch Verstellen eines Übergabegestänges. Aufgrund der hiermit verbundenen, schwergewichtigen Mechanik ist die Taktzahl sehr begrenzt.

Aus der DE 102 49 571 A1 ist eine Transfervorrichtung zum Transferieren von kleinen pharmazeutischen Behältnissen wie Ampullen bekannt. Die Ampullen sind senkrecht zur einer kreisförmigen Transportrichtung übergebbar, wobei hierzu mit Saugköpfen ausgestattete Kolben in radialer Richtung verstellbar sind. Auch hier ist das Problem die aufwendige Mechanik und die Größe der bewegten Massen. Aufgrund der Förderung der Behältnisse mittels einer Förderschnecke ist die Vorrichtung grundsätzlich nicht geeignet zum Transferieren von Dosen od.dgl. , da eine Oberflächenbeschädigung zwangsläufig resultiert.

Aus der DE 43 33 186 A1 ist eine ausschließlich getaktet betreibbare Transfervorrichtung zum Transferieren von Blisterverpackungen bekannt. Die bekannte Vorrichtung muss für einen Transfertakt innehalten, d.h. kann nicht weiter rotieren, wodurch die Taktzahl sehr begrenzt ist. Die Vorrichtung arbeitet mit vergleichsweise starren Saugnäpfen, die über eine komplexe Verstellmechanik entlang einer Übergabeachse verstellbar sind. Nicht nur aufgrund der getakteten Betriebsweise (keine Rotation bei Übergabe), sondern auch aufgrund der Größe der bewegten Massen sind schnelle Taktzahlen nicht realisierbar.

Aus der DE 10 2005 011 130 A1 ist eine Transfervorrichtung für Dosen bekannt, wobei die Übergabe über relativ zu einer Trommel verschwenkbar angeordnete Schwenkhebel erfolgt. Auch hier ist sind der Taktzahl aufgrund der großen bewegten Massen tiefe Grenzen gesetzt.

Die EP 0 119 496 A beschreibt eine Transfervorrichtung für Hohlglasbehälter, wobei die Aufnahmen für die Hohlglasbehälter vakuumbeaufschlagt sind. Da die Hohlglasbehälter von einem Förderband auf ein Förderband (Transportband) übergeben werden, d.h. die Hohlglasbehälter sich zum Übergabezeitpunkt in vertikaler Richtung nach unten auf Transportbändern abstützen können, gibt es keine problematische Freiflugphase wie beim Stand der Technik bei der Übergabe von Dosen, beispielsweise zwischen zwei Vakuumtrommeln.

Die CH 678 616 A5 beschreibt eine Transfervorrichtung zur Übergabe von Gebäckstücken oder Süßwarenstücken mit einer komplexen Übergabemechanik, bei welcher Übergabearme relativ zu einer Trommel verstellt werden müssen. Zur schnellen Übergabe von Dosen ist die bekannte Vorrichtung nicht geeignet.

Ausgehend von dem vorgenannten Stand der Technik liegt der Erfindung die Aufgabe zugrunde, eine verbesserte Transfervorrichtung anzugeben, mit der das Risiko von Fehlübergaben reduziert wird. Ferner besteht die Aufgabe darin, ein Transfersystem mit mindestens einer entsprechend verbesserten Transfervorrichtung anzugeben sowie ein Verfahren zum Transferieren von Dosen, insbesondere zum Betreiben einer nach dem Konzept der Erfindung ausgebildeten Vorrichtung.

Diese Aufgabe wird hinsichtlich der Transfervorrichtung mit den Merkmalen des Anspruchs 1, hinsichtlich des Transfersystems mit den Merkmalen des Anspruchs 10 und hinsichtlich des Verfahrens mit den Merkmalen des Anspruchs 12 gelöst.

Vorteilhafte Weiterbildungen der Erfindung sind in den Unteransprüchen angeben. In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen vorrichtungsgemäß offenbarte Merkmale als verfahrensgemäß offenbart gelten und beanspruchbar sein. Ebenso sollen verfahrensgemäß offenbarte Merkmale als vorrichtungsgemäß offenbart gelten und beanspruchbar sein.

Der Erfindung liegt der Gedanke zugrunde, die Ansaugmittel, insbesondere deren Ansaugelemente derart auszubilden, dass diese, zumindest abschnittsweise zusammen mit der angesaugten Dose bzw. dem angesaugten Dosenrohling (oder sonstigen Behälter) entlang der sich winklig, insbesondere senkrecht zum Transportweg erstreckenden Übergabe- bzw. Übernahmeachse bewegbar sind, um die ungeführte Flugzeitspanne, vorzugsweise bis auf null zu verkürzen. Mit anderen Worten sind erfindungsgemäß die Ansaugelemente zur unmittelbaren Anlage am Übergabegut derart reversibel deformierbar ausgebildet und angeordnet, dass deren Ansaugöffnung winklig zur Bewegungsrichtung (Transportrichtung) einer Ansaugelementfixierung, vorzugsweise zu einer fakultativen, insbesondere prismenförmigen, Aufnahme, bevorzugt Dosenaufnahme, bewegbar sind, und zwar zwischen einer eingefahrenen Position, in welcher die Dose bzw. der Dosenrohling (oder ein sonstiges Behältnis) an dem deformierten (komprimierten) Ansaugelement gehalten ist und bevorzugt an der fakultativen Dosenaufnahme anliegt und einer ausgefahrenen Position, wobei die ausgefahrene Position nicht zwingend, jedoch bevorzugt eine Position ist, in der die Dose wieder an einer weiteren, vorzugsweise zumindest zum Übergabezeitpunkt synchron laufend angesteuerten Transfervorrichtung anliegt und noch weiter bevorzugt dort durch Ansaugen gehalten ist. Bevorzugt ist eine Ausführungsform, bei der auf Aufnahmen zum Abstützen der Güter, insbesondere auf Dosenaufnahmen, verzichtet wird und sich die Dose, der Dosenrohling oder der sonstige Behälter ausschließlich an mindestens einem elastisch deformierten Ansaugelement abstützt. Das Verstellen der Ansaugelemente in die eingefahrene Position erfolgt erfindungsgemäß nur aufgrund der Saugwirkung einer Unterdruckquelle und einer daraus resultierenden reversiblen Deformation der Ansaugelemente. Anders ausgedrückt ist mit Vorteil vorgesehen, dass die Dose, der Dosenrohling oder der sonstige Behälter ausschließlich aufgrund der Saugkraft bedingten Deformation des Ansaugelementes relativ zu einem Sauganschluss, der das Ansaugelement mit Unterdruck versorgt verstellt wird, wobei dem Sauganschluss bevorzugt keine zusätzlichen Aktormittel zugeordnet sind, sondern dieser dauerhaft ortsfest bleibt relativ zu einer Drehachse einer als Vakuumtrommel ausgebildeten Transfervorrichtung oder ortsfest bleibt relativ zu einem Bandkörper einer als Taschenband ausgebildeten Transfervorrichtung. Umso weiter die Ansaugöffnung gemeinsam mit der Dose bzw. dem Dosenrohling entlang der Übergabe- bzw. Übernahmeachse in Richtung einer Übergabeposition, insbesondere in Richtung einer weiteren Transfervorrichtung verstellbar ist, desto geringer ist eine ungeführte Zeitspanne bzw. Freiflugzeitspanne der Dose bzw. des Dosenrohlings und umso geringer ist das Fehlübergaberisiko.

Um möglichst hohe Durchsatzraten zu erzielen ist erfindungsgemäß vorgesehen, dass das Verstellen der Dose, des Dosenrohlings oder des sonstigen Behältnisses entlang der Übergabe- und/oder Übernahmeachse während des Transportierens entlang des Transportweges erfolgt, also im Falle einer Vakuumtrommel bei rotierender Vakuumtrommel bzw. im Falle eines Taschenbandes bei bewegtem Taschenband.

Ganz besonders bevorzugt ist eine Ausführungsform, bei der die Ansaugelemente als Faltenbalg ausgebildet sind, der sich elastisch ziehharmonikaartig bei Ansaugen der Dosen, des Dosenrohlings oder des sonstigen Behälters bei Unterdruckbeaufschlagung zusammenfaltet. Dabei ist es ausreichend, wenn das Ansaugelement zur Überbrückung des Übergabeweges mindestens eine Falte aufweist, umfassend zwei winklig zueinander verlaufende Wandabschnitte, die um eine, bevorzugt als eine Art Filmscharnier ausgebildete Verbindungskante (ein Verbindungsgelenk) relativ zueinander verschwenkbar sind, insbesondere um im maximal deformierten Zustand zumindest abschnittsweise, vorzugsweise zumindest näherungsweise vollständig aneinander anzuliegen.

Eine nach dem Konzept der Erfindung ausgebildete, vorzugsweise als Vakuumtrommel oder Taschenband realisierte Dosentransfervorrichtung ermöglicht die Realisierung sehr geringer Taktzeiten. Darüber hinaus ist es bei der Verwendung mindestens einer nach dem Konzept der Erfindung ausgebildeten Transfervorrichtung nicht mehr notwendig, dass die Übergabe einer Dose oder eines Rohlings von der Transfervorrichtung bzw. die Übernahme einer Dose in die Transfervorrichtung im Wesentlichen entlang einer Vertikalachse erfolgt, sondern die Übergabe- und/oder Übernahmeachse kann winklig zu einer Vertikalen erfolgen, sogar in einem 90°-Winkel.

In dem vorliegenden Dokument wird der Begriff Dosentransfervorrichtung als Synonym für Transfervorrichtung und Dosenaufnahme als Synonym für Aufnahme und Dosentransfersystem als Synonym für Transfersystem sowie Dose als Synonym für Behältnis, z.B. Flaschen, Tubenrohlinge, Tuben, Spritzgussbehälter, Becher, Verpackungsbehälter verwendet. Diese Begrifflichkeiten soll den Schutzbereich nicht auf Dosen oder Dosenrohlinge beschränken, lediglich in einer bevorzugten Ausführungsform.

Wie erläutert ist erfindungsgemäß vorgesehen, dass die Ansaugelemente, vorzugsweise ausschließlich, aufgrund der Ansaugwirkung von diese umfassenden Ansaugmitteln bei angesaugter Dose oder angesaugten Dosenrohling von der ausgefahrenen Position in die eingefahrene Position bewegbar sind. Ganz besonders zweckmäßig ist es, wenn in diesem Fall auf von den Ansaugmitteln separate Aktuatormittel verzichtet wird. Hierzu ist es bevorzugt, die Ansaugelemente oder deren druckleitende, vorzugsweise schlauchartige Verbindung zu einem in Bezug auf die Übergabe- und/oder Übernahmeachse, stationären Sauganschluss deformierbar auszugestalten. Bevorzugt sind die Ansaugelemente derart angeordnet, däss diese die Dose, den Dosenrohling oder die sonstigen Behälter mantelflächenseitig, d.h. senkrecht zu dessen Hocherstreckung ansaugen.

Erfindungsgemäß beträgt der ausschließlich durch reversible Deformation der Ansaugelemente zurückgelegte Verstellweg zum Verstellen der Dosen, Dosenrohlinge oder sonstigen Behältnisse entlang der Übergabe und/oder Übernahmeachse mindestens 1mm. Vorzugsweise ist dieser Verstellweg aus einem Wertebereich zwischen 1 mm und 10mm, vorzugsweise zwischen 2mm und 5mm, noch weiter bevorzugt zwischen 2mm und 4mm gewählt. Wie erwähnt ist es besonders vorteilhaft, wenn dieser Weg ausschließlich durch die aus der Unterdruckbeaufschlagung resultierende, reversible Deformation der Ansaugelemente überwunden wird, d.h. es wird bevorzugt auf weitere Verstellmechaniken verzichtet. Noch anders ausgedrückt ist es bevorzugt, wenn ein Fixierabschnitt der Ansaugelemente im Falle der Ausbildung der Transfervorrichtung als Vakuumtrommel dauerhaft den gleichen Abstand zur Drehachse aufweist. Im Falle der Ausbildung der Transportvorrichtung als Transportband, insbesondere Taschenband ist der Fixierbereich der Ansaugelemente vorzugsweise dauerhaft gleich beabstandet zu dem Bandkörper.

Ganz besonders bevorzugt ist es, wenn die Ansaugelemente derart ausgebildet sind, dass diese über eine größere Strecke reversibel deformierbar sind, als sie in der Transportvorrichtung verbautem Zustand zur Überwindung des Transportweges deformiert werden müssen. Anders ausgedrückt, ist es bevorzugt, wenn die Ansaugelemente derart ausgebildet sind, dass diese im Betrieb der Transportvorrichtung nicht maximal deformiert werden, sondern nur über einen Teilweg der maximalen Deformierbarkeit, um hierdurch die Deformationsgeschwindigkeit zu optimieren und eine besonders robuste Anordnung zu erhalten. Besonders zweckmäßig ist es, wenn der Weg der maximalen reversiblen Deformierung entlang der Übergabe- und/oder Übernahmeachse, beispielsweise durch manuelle Kraftbeaufschlagung mindestens 2mm, vorzugsweise mindestens 4mm beträgt. Ganz besonders bevorzugt ist dieser maximale reversible Deformatiönsweg aus einem Wertebereich zwischen 2mm und 12mm gewählt, ganz besonders bevorzugt zwischen 4mm und 12mm.

Wie eingangs bereits erwähnt, ist es besonders bevorzugt, wenn die Dosen, Dosenrohlinge oder Behälter sich während des Transports in der Transportrichtung ausschließlich an mindestens einem, vorzugsweise an mindestens zwei Ansaugelementen abstützen, d.h., bevorzugt ist es, zur optimalen Schonung der Oberfläche auf entsprechende Aufnahmen mit einer zur Außenkontur der zu transportierenden Gegenstände korrespondierenden Negativkontur zu verzichten. Für den Fall, dass zur Gewährleistung eines möglichst ruhigen Transportes derartige Aufnahmen, insbesondere Dosenaufnahmen vorgesehen werden, werden die Dosen, Dosenrohling oder sonstigen Behältnisse, vorzugsweise ausschließlich durch Deformation der Ansaugelemente relativ zu den Aufnahmen entlang der Übergabe- und/oder Übernahmeachse verstellt.

Wie eingangs erwähnt ist es besonders bevorzugt, wenn die Dosentransfervorrichtung als Vakuumtrommel ausgebildet ist. Eine solche Vakuumtrommel zeichnet sich dadurch aus, dass die Dosenaufnahmen auf einer gedachten Zylindermantelfläche angeordnet sind, und zwar konzentrisch um eine Drehachse herum. Die fakultativ vorgesehenen Dosenaufnahmen sind, vorzugsweise zusammen mit dem mindestens einen ihnen jeweils zugeordneten oder von diesen jeweils gebildeten Ansaugelement, vorzugsweise über eine Kulisse in Abhängigkeit der Umfangsposition entlang der Drehachse in an sich bekannter Weise verstellbar angeordnet. Bei einer Vakuumtrommel erstreckt sich die Übergabe- und/oder Übernahmeachse vorzugsweise in radialer Richtung, bezogen auf die Drehachse der Vakuumtrommel.

Alternativ kann die Dosentransfervorrichtung auch als sogenanntes umlaufendes Taschenband ausgebildet sein, wobei in jeder Tasche vorzugsweise eine Dose bzw. ein Dosenrohling aufnehmbar ist. Die Taschen werden von den, insbesondere prismenförmigen Dosenaufnahmen gebildet, wobei jeder Dosenaufnahme mindestens ein, vorzugsweise senkrecht zum Transportweg der Dosenaufnahmen verstellbares Ansaugelement zugeordnet ist, oder jede Dosenaufnahme ein solches Ansaugelement bildet. Das Taschenband ist bevorzugt um mindestens zwei Umlenkrollen geführt.

Bevorzugt sind die Ansaugelemente als Federelemente ausgebildet, wobei die Federkraft die mindestens eine Ansaugöffnung, d.h. den Umfangsrand der Ansaugöffnung entlang der Übergabe- und/oder Übernahmerichtung von der zugehörigen Dosenaufnahme weg beaufschlagt.

Im Hinblick auf die Ausgestaltung der Ansaugelemente gibt es unterschiedliche Möglichkeiten. So können diese bevorzugt unmittelbar selbst die Verbindung von einem stationären, vorzugsweise mit einer zentralen Unterdruckversorgung verbundenen Sauganschluss und der Ansaugöffnung des Ansaugelementes herstellen.

Auch hinsichtlich der geometrischen Ausgestaltung der Ansaugelemente gibt es unterschiedliche Möglichkeiten. So können diese ihre mindestens eine Ansaugfläche in einem Randbereich vollumfänglich begrenzen, was bevorzugt ist. Es ist jedoch auch denkbar, die Ansaugelemente derart auszuformen, dass im Bereich der Ansaugöffnung bewusst Fehlluft eingesaugt wird.

Ganz besonders zweckmäßig ist es, wenn die Ansaugelemente eine zur Anlage an der anzusaugenden Dose oder dem Dosenrohling ausgebildete und bestimmte, vorzugsweise als Dichtfläche ausgeführte Anlagefläche aufweisen, wobei diese Anlagefläche vorzugsweise aus einem Elastomermaterial ausgebildet ist. Bevorzugt umgibt diese Anlagefläche die Ansaugöffnung unmittelbar. Besonders bevorzugt ist es, wenn die Ansaugelemente vollständig oder zumindest teilweise, ganz besonders bevorzugt zumindest dosenseitig, also im Bereich der vorerwähnten Anlagefläche aus Elastomermaterial ausgebildet sind. Eine Ausbildung aus Elastomermaterial ermöglicht auch die ebenfalls vorerwähnte Ausführung einer elastischen Deformierbarkeit.

Für den Fall des Vorsehens von Aufnahmen für die Dosen, Dosenrohlinge oder sonstige Behälter ist vorgesehen, dass es sich bei den Ansaugelementen um von den Dosenaufnahmen separate Elemente handelt, die relativ zu den Dosenaufnahmen entlang der Übergabe- und/oder Übernahmeachse verstellbar angeordnet sind. Bevorzugt sind in diesem Fall die Dosenaufnahmen nicht entlang der vorgenannten Achse verstellbar angeordnet.

Die Erfindung betrifft auch ein Transfersystem, insbesondere für eine oder als Teil einer Dosenherstellungsanlage, umfassend eine erste Tansfervorrichtung nach dem Konzept der Erfindung. Das Transfersystem umfasst zusätzlich zu der ersten Transfervorrichtung eine weitere (zweite) Transfervorrichtung, die besonders bevorzugt ebenfalls nach dem Konzept der Erfindung ausgebildet ist. Die Transfervorrichtungen sind so angesteuert, dass die jeweils übergebende Dosenaufnahme, zumindest zeitweise, synchron läuft mit der jeweils übernehmenden Dosenaufnahme. Es kann sich um identisch ausgebildete Transfervorrichtungen handeln oder um unterschiedlich ausgestaltete. Besonders bevorzugt ist es, wenn zwei als Vakuumtrommeln ausgebildete Transfervorrichtungen zusammenwirken. Auch ist es möglich eine Vakuumtrommel mit beispielsweise einer als Taschenband ausgeführten Transfervorrichtung zu kombinieren, oder zwei Taschenbandtransfervorrichtungen zusammenwirken zu lassen.

In Weiterbildung der Erfindung ist mit Vorteil vorgesehen, dass die beiden Dosentransfervorrichtungen derart relativ zueinander angeordnet sind, dass die Dosen oder Dosenrohlinge in vertikaler Richtung, insbesondere von unten nach oben, d.h. entgegen der Schwerkraftwirkung übergebbar sind oder alternativ nicht in einer Vertikalrichtung von der einen Transfervorrichtung zur anderen übergeben werden, sondern winklig hierzu, insbesondere in einem Winkel zwischen etwa 10° und etwa 170°, vorzugsweise zwischen etwa 20° und 160° zur Vertikalen. Diese Anordnung ist aufgrund des Einsatzes mindestens einer nach dem Konzept der Erfindung ausgebildeten Transfervorrichtung möglich, da die Dose je nach Ausgestaltung der Dosentransfervorrichtung nur über eine minimale Zeitspanne, vorzugsweise überhaupt nicht frei bzw. ungefangen ist, sondern, vorzugsweise über den gesamten Übergabeweg von mindestens einem Ansaugelement geführt bzw. zusammen mit diesem verstellt wird.

Die Erfindung führt auch auf ein Verfahren zum Übergeben und/oder Übernehmen von Dosen, Dosenrohlingen oder sonstigen Behältnissen, insbesondere mit Hilfe einer nach dem Konzept der Erfindung ausgebildeten Transfervorrichtung und/oder mit einem nach dem Konzept der Erfindung ausgebildeten Transfersystem. Erfindungsgemäß ist vorgesehen, dass das Verstellen der Dose, des Dosenrohlings oder des sonstigen Behältnisses entlang der Übergabe- und/oder Übernahmeachse über die gesamte Verstellstrecke durch eine saugkraftbeaufschlagungsbedingte reversible Deformation eines eine Ansaugöffnung aufweisenden Ansaugelementes erfolgt. Dabei ist es besonders zweckmäßig, wenn die vorerwähnte Übergabe- und/oder Übernahmeachse winklig, insbesondere senkrecht zu einem Transportweg bzw. einer Transportrichtung von Dosenaufnahmen einer Dosentransfervorrichtung erfolgt. Bevorzugt ist den Ansaugmitteln eine zentrale Vakuumerzeugungsvorrichtung, insbesondere ein Vakuumkompressor, bevorzugt mit Vakuumtank zugeordnet, wobei es noch weiter bevorzugt ist, wenn der am System anliegende Unterdruck zwischen etwa 800 und 900mbar Absolutdruck beträgt. Es handelt sich also bevorzugt um ein Vakuum zwischen etwa 100 und 200mbar, bezogen auf einen Atmosphärendruck von durchschnittlich 1000mbar.

Besonders zweckmäßig ist es, wenn an der Ansaugöffnung der übernehmenden Dosenaufnahme Unterdruck anliegt, wenn der Unterdruck an der Ansaugöffnung der übergebenden Dosenaufnahme der benachbarten Dosentransfervorrichtung der Unterdruck, vorzugsweise bis auf null reduziert wird.

In Weiterbildung der Erfindung ist mit Vorteil vorgesehen, dass die Dose oder der Dosenrohling in einer eingefahrenen Position des dann reversibel komprimierten Ansaugelementes an einer Dosenaufnahme einer ersten Transfervorrichtung anliegt und/oder dass die Dose oder der Dosenrohling in einer ausgefahrenen Position des Ansaugelementes an einer Dosenaufnahme einer zweiten, d.h. weiteren benachbarten Transfervorrichtung anliegt.

Besonders zweckmäßig ist es, wenn zumindest in einem Zeitpunkt, vorzugsweise zu Beginn einer Übergabe mindestens zwei Ansaugelemente zweier unterschiedlicher Transfervorrichtungen an der Dose, insbesondere in diametral gegenüberliegenden Positionen anliegen, wobei zumindest an einem der beiden Ansaugelemente zu diesem Zeitpunkt Vakuum anliegt.

Erfindungsgemäß ist vorgesehen, dass das von einer fakultativen Dosenaufnahme separate, Ansaugelement während der Verstellbewegung der Dose in Richtung zur Dosenaufnahme und/oder in der eingefahrenen Position des Ansaugelements reversibel, insbesondere elastisch, deformiert ist. So kann es sich beispielsweise um ein kanalförmiges bzw. hülsenförmiges Bauteil, insbesondere in Form eines Faltenbalges, aus einem Elastomerwerkstoff handeln, welches während der Bewegung auf die Dosenaufnahme zu verformt wird.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine perspektivische Ansicht einer als Vakuumtrommel ausgebildeten Dosentransfervorrichtung,
- Fig. 2:: eine Seitenansicht der Dosentransfervorrichtung gemäß Fig. 1,
- Fig. 3:: eine Querschnittsansicht der Dosentransfervorrichtung gemäß Fig. 2 etwa auf Höhe von aus Elastomermaterial ausgebildeten Ansaugelementen,
- Fig. 4:: eine bevorzugte Ausführungsform eines Ansaugelementes aus Elastomermaterial, welches beim Verstellen entlang der Übergabe- und/oder Übernahmeachse elastisch verstellbar bzw. komprimierbar ist, und
- Fig. 5:: eine besonders bevorzugte Ausführungsform eines Ansaugelementes aus Elastomermaterial, welches beim Verstellen entlang der Über- und/oder Übernahmeachse elastisch komprimierbar ist und hierdurch in etwa 2mm Weg zurücklegt.

In den Figuren sind gleiche Elemente und Elemente mit der gleichen Funktion mit den gleichen Bezugszeichen gekennzeichnet.

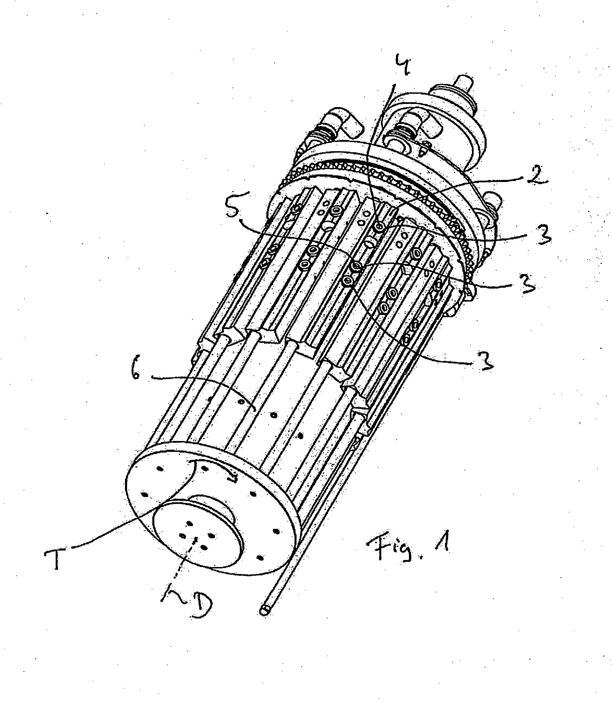

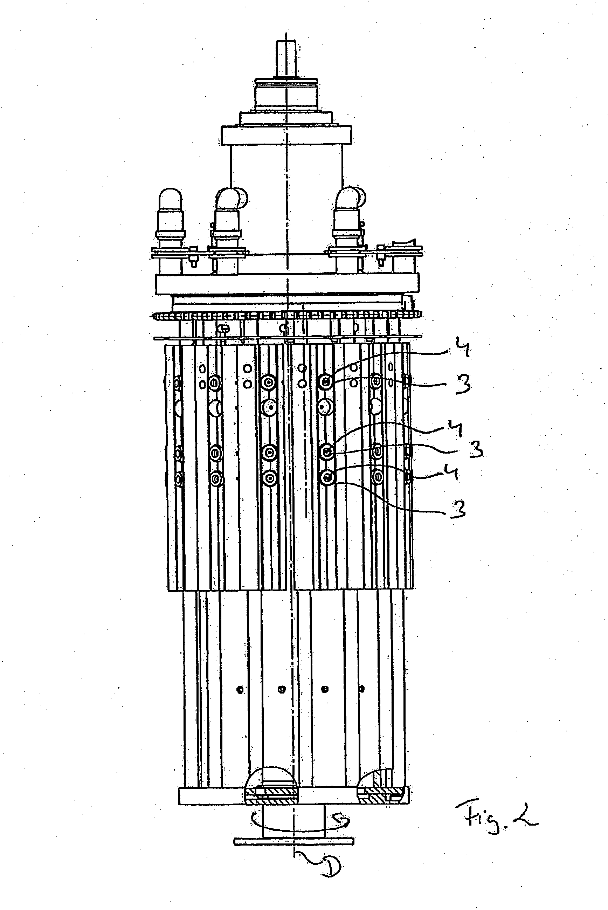

In den Fig. 1 bis 3 ist in unterschiedlichen, teilweise geschnittenen Ansichten eine als Vakuumtrommel ausgebildete Dosentransfervorrichtung für Dosen und Dosenrohlinge gezeigt. Die Dosentransfervorrichtung 1 umfasst eine Vielzahl von in Umfangrichtung um eine Drehachse D herum angeordnete, prismatisch ausgeformte Dosenaufnahmen 2 zur Anlage jeweils einer nicht dargestellten Dose oder eines nicht dargestellten Dosenrohlings. In dem gezeigten Ausführungsbeispiel sind jeder Dosenaufnahme 2 mehrere Ansaugelemente 3 zugeordnet, die über die Axialerstreckung der Dosenaufnahmen 2 verteilt angeordnet sind. Grundsätzlich ist die Erfindung mit einem einzigen Ansaugelement 3 pro Dosenaufnahme 2 realisierbar, wobei die Haltesicherheit mit mehreren Ansaugelementen 3 erhöht wird. Jedes Ansaugelement 3 ist in dem gezeigten Ausführungsbeispiel mit einer Ansaugöffnung 4 versehen, die mit Vakuum beaufschlagbar ist. Hierzu sind die Ansaugelemente 3 Teil von nicht weiter dargestellten, an sich bekannten Ansaugmitteln 5. Die Dosenaufnahmen 2 werden bei rotierender Vakuumtrommel um die Drehachse D entlang eines Transportweges T bewegt, der in dem gezeigten Ausführungsbeispiel eine Kreisform aufweist und im Fall der Ausbildung der Dosentransfervorrichtung als Taschenband nahezu beliebige Geometrien aufweisen kann.

Die Dosenaufnahmen 2 sind nicht nur entlang des Transportweges T, d.h. hier entlang einer Kreisbahn verstellbar, sondern auch parallel zur Drehachse D. Hierzu sind die Dosenaufnahmen 2 geführt an axialen Führungsstangen 6. Zur Aktuierung dieser axialen Verstellbewegung laufen die Dosenaufnahmen 2 im Innern der Vakuumtrommel auf einer feststehenden Kurvenbahn ab.

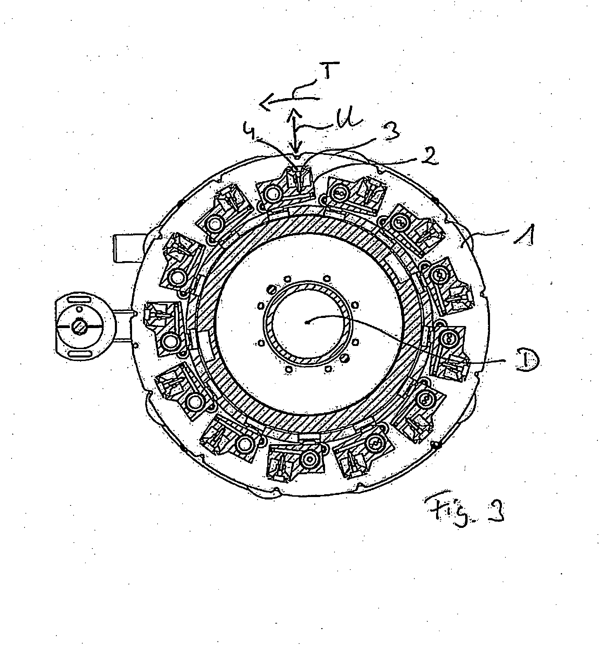

Die gezeigte Dosentransfervorrichtung 1 zeichnet sich insbesondere nun dadurch aus, dass die Ansaugelemente 3, wie sich insbesondere aus der Querschnittsansicht gemäß Fig. 3 ergibt, senkrecht zu dem Transportweg T sowie senkrecht zur Drehachse D entlang einer Übergabe- und/oder Übernahmeachse U verstellbar sind, um während der Übernahme und/oder Übergabe zumindest über einen Teil der Verstellstrecke der Dose, vorzugsweise über die gesamte Verstellstrecke entlang der Achse U eine Führung zu gewährleisten, um möglichst eine Freiflugphase zwischen zwei Transfervorrichtungen, wie sie im Stand der Technik notwendig ist, zu vermeiden oder zumindest zu reduzieren.

In dem gezeigten Ausführungsbeispiel sind die Ansaugelemente 3 aus einem elastischen Material ausgebildet und an der jeweils zugehörigen Dosenaufnahme 2 rückseitig fixiert. Hierdurch sind die Ansaugelemente 3 entlang der Achse U bewegbar. Gezeigt sind die Ansaugelemente 3 in einer ausgefahrenen Position, in welcher sie zur Übernahme einer Dose oder eines Dosenrohlings bereit sind. Bevorzugt ist die Position der gezeigten Dosentransfervorrichtung 1 in einem Dosentransfersystem so relativ zu einer weiteren Dosentransfervorrichtung positioniert, dass die Ansaugelemente 3 einer Dosenaufnahme die zu übernehmende Dose berühren können, wenn diese noch an der weiteren Transfervorrichtung angesaugt ist, so dass der gesamte Übergabeweg ohne Freiflugphase überwunden werden kann. Sobald die Ansaugelemente 3 der gezeigten Transfervorrichtung 1 die Dose bzw. den Dosenrohling übernommen haben werden diese nach radial innen in eine eingefahrene Position verstellt, und zwar in dem konkreten Ausführungsbeispiel ausschließlich aufgrund der Saugwirkung der Ansaugmittel. Dies ist möglich, da die Ansaugelemente 3 aus einem deformierbaren Material ausgebildet sind, und/oder eine deformierbare Geometrie, beispielsweise in der Art oder Form eines Faltenbalks aufweisen. In der eingefahrenen radial inneren Position stützt sich die übernommene Dose radial innen an der Dosenaufnahme 2 ab und wird gleichzeitig weiterhin von den Ansaugelementen 3 gehalten bzw. fixiert.

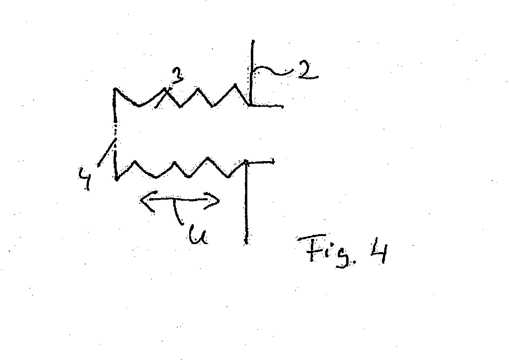

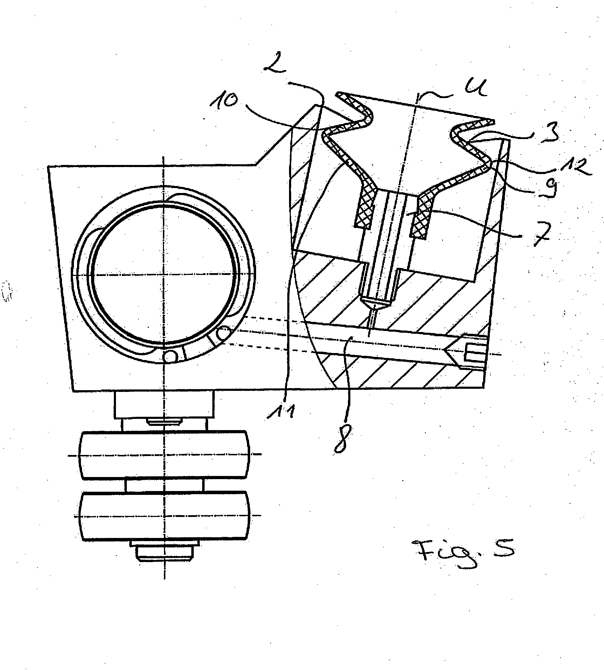

In den Fig. 4 und 5 sind unterschiedliche Ausgestaltungen und Anordnungen von Ansaugelementen 3 sehr exemplarisch und schematisch dargestellt. Zu erkennen ist, dass sämtliche Ausführungsformen von Ansaugelementen 3 jeweils mindestens eine Ansaugöffnung 4 aufweisen, die entlang der Übergabe- und/oder Übernahmeachse U mit oder ohne Dose bzw. Dosenrohling ausschließlich aufgrund der Deformation des faltenbalgartigen Ansaugelementes verstellbar ist.

Fig. 4 zeigt eine bevorzugte Variante eines als Faltenbalg ausgebildeten Ansaugelementes 3, wie dieses in ähnlicher Ausgestaltung bei dem Ausführungsbeispiel gemäß den Fig. 1 bis 3 zur Anwendung kommt. Das Ansaugelement 3 ist hier vollständig, jedoch zumindest teilweise aus einem Elastomermaterial ausgebildet und wird beim Verstellen in die eingefahrene Position komprimiert. Auch ist eine Ausführung auf nicht elastischem Material bei entsprechender, z.B. faltenbalgähnlicher Geometrie möglich.

Bei der dargestellten Ausführungsform kann das Verstellen nach radial innen in Richtung der Dosenaufnahme 2 ausschließlich aufgrund der Ansaugwirkung erfolgen. Sobald die Dose bzw. der Dosenrohling angesaugt wird füllt die Unterdruckbeaufschlagung des Ansaugelementes 3 zu dessen reversibler Verformung.

In Fig. 5 ist eine ganz besonders bevorzugte Variante eines als Faltenbalg ausgebildeten Ansaugelementes 3 gezeigt, wie dieses in den Ausführungsbeispielen gemäß den Fig. 1 bis 3 zur Anwendung kommt. Das Ansaugelement 3 ist vollständig aus Elastomermaterial ausgebildet und formschlüssig durch Hintergreifen verbunden mit einem Sauganschluss 7, welcher die Verbindung zu einer Unterdruckleitung 8 herstellt, die mit einer nicht gezeigten Unterdruckquelle der Ansaugmittel verbunden ist.

Die anzusaugende Dose, der anzusaugende Dosenrohling oder der sonstige Behälter wird bei dieser besonders bevorzugten Ausführungsform ausschließlich durch saugkraftbedingte Deformation des Ansaugelementes entlang der Übergabe- und/oder Übernahmeachse U in Richtung Sauganschluss verstellt. Beim Verstellvorgang liegt die Dose, der Dosenrohling oder der Behälter mantelseitig an der Aufnahmeöffnung an, und der sich aufbauende Unterdruck verstellt das Transportgut ausschließlich durch Deformation des Ansaugelementes 3 relativ zu dem Sauganschluss 7 in Richtung auf eine fakultative Aufnahme 2 zur Anlage des Transportgutes. Denkbar ist es, bei einer alternativen Ausführungsform auf eine solche Aufnahme 2 zu verzichten. In diesem Fall würde das Ansaugelement 3 maximal deformiert, in dem gezeigten Ausführungsbeispiel um deutlich mehr als die vorgenannten 2mm.

Das Ansaugelement 3 umfasst eine vollumfänglich, ringförmige Falte 9, wobei hier ausschließlich eine einzige Falte 9 vorgesehen ist, was bevorzugt ist - es können jedoch wie bei dem Ausführungsbeispiel gemäß Fig. 4 auch mehr als eine vollständige Falte 9 axial benachbart vorgesehen werden. Die Falte 9 umfasst bzw. wird gebildet von zwei axial benachbarten und winklig zueinander angeordneten Wandabschnitten 10, 11, die im Bereich einer Verbindungskante bzw. als Filmgelenk ausgebildeten Gelenkes 12 einstückig miteinander verbunden sind und die beim Ansaugen der Dose, des Dosenrohlings oder des sonstigen Behältnisses aufeinanderzu bewegbar sind, so dass sich der Winkel zwischen den Wandabschnitten 10, 11 verkleinert und in der Folge die Dose, der Dosenrohling oder der sonstige Behälter ausschließlich aufgrund dieser reversiblen Deformation, hier Komprimierung aus der gezeigten ausgefahrenen Position des Ansaugelementes 3 in Richtung Sauganschluss 7 bewegt wird.

### Bezugzeichen

- 1: Tansfervorrichtung
- 2: Aufnahme
- 3: Ansaugelemente
- 4: Ansaugöffnungen
- 5: Ansaugmittel
- 6: Führungsstangen
- 7: Sauganschluss
- 8: Unterdruckleitung
- 9: Falte
- 10: Wandabschnitt
- 11: Wandabschnitt
- 12: Gelenk

- D: Drehachse
- T: Transportweg
- U: Übergabe- und/oder Übernahmeachse

## Patentansprüche

1. Transfervorrichtung, vorzugsweise Dosentransfervorrichtung, zur Übergabe und/oder Übernahme von Dosen, Dosenrohlingen oder sonstigen Behältnissen in bzw. aus einer sich winklig, vorzugsweise senkrecht, zu einem Transportweg (T) erstreckenden Übergabebzw. Übemahmeachse (U), mit mehreren während der Übergabe entlang des Transportweges (T) bewegbaren, jeweils mindestens eine Ansaugöffnung (4) aufweisenden und mit einer Unterdruckquelle verbindbaren Ansaugelementen (3) zum saugenden Halten der Dosen oder Dosenrohlinge oder der anderen Behältnisse beim Transport entlang des Transportweges (T), wobei die Ansaugelemente (3), zumindest abschnittsweise, entlang der Übergabe- und/oder Übernahmeachse (U) zwischen einer eingefahrenen und einer ausgefahrenen Position bewegbar ausgebildet und/oder angeordnet sind,
**dadurch gekennzeichnet,**
**dass** die, vorzugsweise als Faltenbalg ausgebildeten, Ansaugelemente (3) derart ausgebildet und angeordnet sind, dass diese während der Bewegung entlang der Übergabe- und/oder Übernahmeachse (U) reversibel verformbar sind, derart, dass die Bewegung der Ansaugöffnungen (4) zusammen mit den angesaugten Dosen, Dosenrohlinge oder sonstigen Behältnisse entlang der Übergabeund/oder Übemahmeachse (4), ausschließlich aufgrund der von der Ansaugwirkung der Unterdruckquelle (5) bewirkten, reversiblen Deformation der Ansaugelemente (3) bewirkbar ist, und dass ein ausschließlich durch Deformation der Ansaugelemente (3) überwindbarer Übergabeweg für die Dosen, Dosenrohlinge oder sonstige Behältnisse entlang der Übergabe- und/oder Übernahmeachse (4) mindestens 1mm beträgt und vorzugsweise aus einem Wertebereich zwischen 1mm und 10mm, vorzugsweise 2mm und 5mm, gewählt ist, noch weiter bevorzugt zwischen 2mm und 4mm.

2. Transfervorrichtung nach Anspruch 1,
**dadurch gekennzeichnet,**
**dass** die Ansaugelemente (3) derart ausgebildet sind, dass diese, beispielsweise manuell, reversibel entlang der Übergabe und/oder Übernahmeachse (4) um einen Weg von mindestens 2mm, vorzugsweise um einen Weg aus einem Wertebereich zwischen mindestens 2mm und 12mm, vorzugsweise zwischen 4mm und 12mm verformbar sind.

3. Transfervorrichtung nach einem der vorhergehenden Ansprüche,
**dadurch gekennzeichnet,**
**dass** zum Stützen der Dosen, Dosenrohlinge oder Behälter ausschließlich die Ansaugelemente (3) vorgesehen sind, oder dass den Ansaugelementen (3) Aufnahmen für die Dosen, Dosenrohlinge oder sonstige Behältnisse zugeordnet sind, relativ zu denen die Ansaugelemente (3) durch Deformation bewegbar sind.

4. Transfervorrichtung nach einem der vorhergehenden Ansprüche,
**dadurch gekennzeichnet,**
**dass** die Transfervorrichtung (1) als Vakuumtrommel ausgebildet ist und die Ansaugelemente (3) mit den von diesem separaten oder von diesen gebildeten winklig, insbesondere senkrecht zu der Übergabeund/oder Übernahmeachse (U) verstellbar sind, insbesondere um die Dosen, Dosenrohlinge oder sonstigen Behältnissen von einer Kettenstifte aufweisenden Transportkette zu übernehmen oder auf diese zu übergeben, oder um die Dosen, Dosenrohlinge oder sonstigen Behältnissen auf eine weitere Transfervorrichtung, insbesondere eine Vakuumtrommel, zu übergeben oder von dieser zu übernehmen.

5. Transfervorrichtung nach einem der Ansprüche 1 bis 3,
**dadurch gekennzeichnet,**
**dass** die Transfervorrichtung (1) als ein Taschen aufweisendes Taschenband ausgebildet ist, wobei die Taschen von den Aufnahmen (2) gebildet sind.

6. Transfervorrichtung nach einem der vorhergehenden Ansprüche,
**dadurch gekennzeichnet,**
**dass** die Ansaugelemente (3) als Federmittel ausgebildet sind, die die zugehörige (integrale) Ansaugöffnung (4) entlang der Übergabeund/oder Übernahmeachse (U) in Richtung der ausgefahrenen Position, insbesondere bei von den Aufnahmen (2) separaten Ansaugelementen von der zugehörigen Aufnahme (2) weg, federkraftbeaufschlagend angeordnet sind.

7. Transfervorrichtung nach einem der vorhergehenden Ansprüche,
**dadurch gekennzeichnet,**
**dass** die Ansaugelemente (3) vollständig oder zumindest dosenseitig, insbesondere im Bereich ihrer Ansaugöffnungen, aus einem Elastomermaterial ausgebildet sind.

8. Transfervorrichtung nach einem der vorhergehenden Ansprüche,
**dadurch gekennzeichnet,**
**dass** die Ansaugelemente (3) eine zur Anlage an der anzusaugenden Dose, dem Dosenrohling oder dem sonstigen Behältnis ausgebildete und bestimmte, vorzugsweise als Dichtfläche ausgeführte, Anlagefläche aufweisen.

9. Transfervorrichtung nach einem der vorhergehenden Ansprüche,
**dadurch gekennzeichnet,**
**dass** die Ansaugelemente (3) relativ zu den diesen zugeordneten Aufnahmen (2) entlang der Übergabe- und/oder Übemahmeachse (U) bewegbar sind.

10. Transfersystem, insbesondere für eine oder als Teil einer Dosenherstellungsanlage, umfassend eine erste Transfervorrichtung (1) nach einem der vorhergehenden Ansprüche und mindestens eine zweite, vorzugsweise nach einem der vorhergehenden Ansprüche ausgebildete, Transfervorrichtung (1).

11. Transfersystem nach Anspruch 10,
**dadurch gekennzeichnet,**
**dass** die erste und die zweite Transfervorrichtung (1) derart relativ zueinander angeordnet und angesteuert sind, dass die Dosen und/oder Dosenrohlinge und/oder sonstigen Behältnisse In vertikaler Richtung, insbesondere von unten nach oben, oder alternativ winklig zu einer Vertikalen, insbesondere unter einem Winkel zwischen 10° und 170°, vorzugsweise zwischen 20° und 160" entlang der Übergabe- und/oder Übernahmeachse (U) zwischen den Transfervorrichtungen transferrierbar sind.

12. Verfahren zum Übergeben oder Übernehmen von Dosen oder Dosenrohlingen oder sonstigen Behältnissen, insbesondere mit Hilfe einer Transfervorrichtung (1) nach einem der Ansprüche 1 bis 9 und/oder mit einem Transfersystem nach einem der Ansprüche 10 oder 11, wobei mindestens eine Dose, ein Dosenrohling oder ein sonstiges Behältnis winklig, insbesondere senkrecht zu einem Transportweg (T) entlang eines einer Übergabe- und/oder Übernahmeachse (U) verstellt wird, wobei die Dose, der Dosenrohling oder das sonstige Behältnis während der Übergabe weiter entlang des Transportweges (T) bewegt wird, und wobei das Verstellen der Dose, des Dosenrohlings oder des Behältnisses entlang der Übergabeund/oder Übernahmeachse (U), zumindest abschnittsweise, vorzugsweise über die gesamte Verstellstrecke, zusammen mit mindestens einem eine Ansaugöffnung (4) aufweisenden Ansaugelement (3) erfolgt,
**dadurch gekennzeichnet,**
**dass** das Verstellen der Ansaugöffnung zusammen mit der angesaugten Dose, des Dosenrohlings oder des sonstigen Behältnisses entlang der Übergabe- und/oder Übernahmeachse ausschließlich durch eine, bevorzugt von der Ansaugwirkung der Unterdruckquelle bewirkten, reversiblen Deformation der, vorzugsweise als Faltenbalg ausgebildeten, Ansaugelemente (3) bewirkt wird, und dass ein ausschließlich durch Deformation der Ansaugelemente Übergabeweg für die Dosen, Dosenrohlinge oder sonstige Behältnisse mindestens 1 mm beträgt.

13. Verfahren nach Anspruch 12,
**dadurch gekennzeichnet,**
**dass** die Dose, der Dosenrohling oder das Behältnis in einer eingefahrenen Position des Ansaugelementes (3) an einer Aufnahme (2) einer ersten Transfervorrichtung (1) anliegt und/oder dass die Dose, der Dosenrohling oder das Behältnis in einer ausgefahrenen Position des Ansaugelementes (3) an einer Dosenaufnahme (2) einer zweiten (weiteren) Transfervorrichtung anliegt.

14. Verfahren nach Anspruch 13,
**dadurch gekennzeichnet,**
**dass** zumindest in einem Zeitpunkt mindestens zwei Ansaugelemente (3) von zwei Transfervorrichtungen an der Dose, dem Dosenrohling oder dem sonstigen Behältnis, insbesondere in diametral gegenüberliegenden Positionen, anliegen.

## Claims

1. A transferring device, preferably a can transferring device for transferring and/or receiving cans, can blanks, or other containers out of or into a transferring or respectively receiving axis (U) which extends at an angle, preferably perpendicular, to a transport path (T), with multiple suction elements (3), which can be moved along the transport path (T) during the transfer, each of which has at least one suction opening (4), and which can be connected to a negative pressure source, in order to retain the cans, can blanks, or other containers by means of suction during the transport along the transport path (T), wherein the suction elements (3) are designed and/or arranged in a movable manner between a retracted and an extended position at least along some sections of the transferring and/or receiving axis (U),
**characterized in that**
the suction elements (3), which are preferably designed as bellows, are designed and arranged so as to be reversibly deformable during the movement along the transferring and/or receiving axis (U) such that the movement of the suction openings (4) together with the suctioned cans, can blanks or other containers is able to be brought about along the transferring and/or receiving axis (4), exclusively on the basis of the reversible deformation of the suction elements (3), said deformation being caused by the suction effect of the negative pressure source (5), and that a transfer path able to be overcome exclusively by deformation of the suction elements (3), for the cans, can blanks or other containers along the transferring and/or receiving axis (4) is at least 1 mm and preferably is selected from a range of values between 1 mm and 10mm, preferably 2mm and 5mm, still further preferably between 2mm and 4mm.

2. The transferring device according to Claim 1,
**characterized in that**
the suction elements (3) are constructed such that these are deformable, for example manually, reversibly along the transferring and/or receiving axis (4) by a path of at least 2mm, preferably by a path of a range of values between at least 2mm and 12mm, preferably between 4mm and 12mm.

3. The transferring device according to one of the preceding claims,
**characterized in that**
for supporting the cans, can blanks or containers, exclusively the suction elements (3) are provided, or that mounts for the cans, can blanks or other containers are associated with the suction elements (3), relative to which the suction elements (3) are movable by deformation.

4. The transferring device according to one of the preceding claims,
**characterized in that**
the transferring device (1) is constructed as a vacuum drum and the suction elements (3) are movable with the mounts, separate therefrom or formed thereby, at an angle, in particular perpendicularly to the transferring and/or receiving axis (U), in particular in order to receive the cans, can blanks or other containers from a transport chain having chain pins, or to transfer them thereon, or in order to transfer the cans, can blanks or other containers onto a further transferring device, in particular a vacuum drum, or to receive these therefrom.

5. The transferring device according to one of Claims 1 to 3,
**characterized in that**
the transferring device (1) is constructed as a pocket belt having pockets, wherein the pockets are formed by the mounts (2).

6. The transferring device according to one of the preceding claims,
**characterized in that**
the suction elements (3) are constructed as spring means which are arranged applying elastic force to the associated (integral) suction opening (4) along the transferring and/or receiving axis (U) in the direction of the extended position, in particular, in the case of suction elements separate from the mounts (2), away from the associated mount (2).

7. The transferring device according to one of the preceding claims,
**characterized in that**
the suction elements (3) are constructed completely, or at least on the can side, from an elastomer material, in particular in the region of their suction openings.

8. The transferring device according to one of the preceding claims,
**characterized in that**
the suction elements (3) have a contact surface constructed and specific for abutment against the can, the can blank or other container which is to be suctioned, preferably embodied as a sealing surface.

9. The transferring device according to one of the preceding claims,
**characterized in that**
the suction elements (3) are movable relative to mounts (2), associated therewith, along the transferring and/or receiving axis (U).

10. A transferring system, in particular for, or as part of, a can manufacturing facility, comprising a first transferring device (1) according to one of the preceding claims and at least a second transferring device (1) preferably constructed according to one of the preceding claims.

11. The transferring system according to Claim 10,
**characterized in that**
the first and the second transferring device (1) are arranged relative to one another and actuated such that the cans and/or can blanks and/or other containers are transferable in vertical direction, in particular from below upwards, or alternatively at an angle to a vertical, in particular at an angle between 10° and 170°, preferably between 20°and 160° along the transferring and/or receiving axis (U) between the transferring devices.

12. A method for transferring or receiving cans or can blanks or other containers, in particular by means of a transferring device (1) according to one of Claims 1 to 9 and/or with a transferring system according to one of Claims 10 or 11, wherein at least one can, one can blank or one other container is moved at an angle, in particular perpendicularly to a transport path (T) along a transferring and/or receiving axis (U), wherein the can, the can blank or other container during the transfer is moved further along the transport path (T), and wherein the moving of the can, the can blank or the container along the transferring and/or receiving axis (U), takes place at least partially, preferably over the entire movement distance, together with at least one suction element (3) having a suction opening (4),
**characterized in that**
the moving of the suction opening together with the suctioned can, of the can blank or other container along the transferring and/or receiving axis is brought about exclusively by a reversible deformation, preferably brought about by the suction effect of the negative pressure source, of the suction elements (3), preferably constructed as a bellows, and that a transfer path, exclusively by deformation of the suction elements, for the cans, can blanks or other containers, is at least 1 mm.

13. The method according to Claim 12,
**characterized in that**
the can, the can blank or the container in a retracted position of the suction element (3) lies against a mount (2) of a first transferring device (1) and/or that the can, the can blank or the container in an extended position of the suction element (3) lies against a can mount (2) of a second (further) transferring device.

14. The method according to Claim 13,
**characterized in that**
at least at one time at least two suction elements (3) of two transferring devices lie against the can, the can blank or other container, in particular in diametrically opposite positions.

## Revendications

1. Dispositif de transfert, en particulier dispositif de transfert de boîtes, pour la remise et/ou la reprise de boîtes, d'ébauches de boîtes ou d'autres récipients dans ou hors d'un axe de remise ou de reprise (U) s'étendant sous un certain angle, de préférence perpendiculairement, par rapport à une trajectoire de transport (T), avec plusieurs éléments d'aspiration (3) déplaçables le long de la trajectoire de transport (T) pendant la remise, présentant respectivement au moins une ouverture d'aspiration (4) et pouvant être connectés à une source de dépression, pour le maintien sous aspiration des boîtes ou des ébauches de boîtes ou des autres récipients lors du transport le long de la trajectoire de transport (T), dans lequel les éléments d'aspiration (3) sont, au moins en partie, configurés et/ou disposés de façon déplaçable le long de l'axe de remise et/ou de reprise (U) entre une position rentrée et une position sortie, **caractérisé en ce que** les éléments d'aspiration (3), réalisés de préférence sous forme de soufflet pliant, sont configurés et disposés de telle manière que ceux-ci soient déformables de façon réversible pendant le mouvement le long de l'axe de remise et/ou de reprise (U), de telle manière que le mouvement des ouvertures d'aspiration (4) avec les boîtes ou les ébauches de boîtes ou les autres récipients aspiré(e)s puisse être provoqué exclusivement par suite de la déformation réversible des éléments d'aspiration (3) due à l'effet d'aspiration de la source de dépression (5), et **en ce qu'**une trajectoire de remise pour les boîtes, les ébauches de boîtes ou les autres récipients le long de l'axe de remise et/ou de reprise (4), franchissable exclusivement par déformation des éléments d'aspiration (3), vaut au moins 1 mm, et est de préférence choisie dans une plage de valeurs comprise entre 1 mm et 10 mm, de préférence entre 2 mm et 5 mm, et de préférence encore entre 2 mm et 4 mm.

2. Dispositif de transfert selon la revendication 1, **caractérisé en ce que** les éléments d'aspiration (3) sont configurés de telle manière que ceux-ci soient déformables, par exemple manuellement, de façon réversible le long de l'axe de remise et/ou de reprise (4) d'une course d'au moins 2 mm, de préférence d'une course choisie dans une plage de valeurs comprise entre au moins 2 mm et 12 mm, de préférence entre 4 mm et 12 mm.

3. Dispositif de transfert selon l'une quelconque des revendications précédentes, **caractérisé en ce qu'**exclusivement les éléments d'aspiration (3) sont prévus pour soutenir les boîtes, les ébauches de boîtes ou les récipients, ou **en ce que** des logements sont associés aux éléments d'aspiration (3) pour les boîtes, les ébauches de boîtes ou les autres récipients, par rapport auxquels les éléments d'aspiration (3) sont déplaçables par déformation.

4. Dispositif de transfert selon l'une quelconque des revendications précédentes, **caractérisé en ce que** le dispositif de transfert (1) est réalisé sous forme de tambour sous vide et les éléments d'aspiration (3) avec ceux séparés de celui-ci ou formés par ceux-ci sont déplaçables sous un certain angle, de préférence perpendiculairement à l'axe de remise et/ou de reprise (U), en particulier afin de reprendre les boîtes, les ébauches de boîtes ou les autres récipients d'une chaîne transporteuse présentant des broches de chaîne ou de les remettre sur celle-ci, ou afin de remettre les boîtes, les ébauches de boîtes ou les autres récipients sur un autre dispositif de transfert, en particulier un tambour à vide, ou de les reprendre de celui-ci.

5. Dispositif de transfert selon l'une quelconque des revendications 1 à 3, **caractérisé en ce que** le dispositif de transfert (1) est réalisé sous forme d'une bande de poches présentant des poches, dans lequel les poches sont formées par les logements (2).

6. Dispositif de transfert selon l'une quelconque des revendications précédentes, **caractérisé en ce que** les éléments d'aspiration (3) sont réalisés sous forme de moyens de ressort, qui sont disposés en appliquant une force de ressort à l'ouverture d'aspiration (intégrale) correspondante (4) le long de l'axe de remise et/ou de reprise (U) en direction de la position sortie, en particulier lorsque des éléments d'aspiration séparés des logements (2) sont écartés du logement correspondant (2).

7. Dispositif de transfert selon l'une quelconque des revendications précédentes, **caractérisé en ce que** les éléments d'aspiration (3) sont formés entièrement ou au moins du côté des boîtes, en particulier dans la région de leurs ouvertures d'aspiration, en un matériau élastomère.

8. Dispositif de transfert selon l'une quelconque des revendications précédentes, **caractérisé en ce que** les éléments d'aspiration (3) présentent une face d'appui déterminée et réalisée de préférence comme face d'étanchéité, pour l'appui sur la boîte, l'ébauche de boîte ou l'autre récipient à aspirer.

9. Dispositif de transfert selon l'une quelconque des revendications précédentes, **caractérisé en ce que** les éléments d'aspiration (3) sont déplaçables par rapport aux logements (2) associés à ceux-ci le long de l'axe de remise et/ou de reprise (U).

10. Système de transfert, en particulier pour une ou une partie d'une installation de fabrication de boîtes, comprenant un premier dispositif de transfert (1) selon l'une quelconque des revendications précédentes et au moins un deuxième dispositif de transfert (1) réalisé de préférence selon l'une quelconque des revendications précédentes.

11. Système de transfert selon la revendication 10, **caractérisé en ce que** le premier et le deuxième dispositifs de transfert (1) sont disposés l'un par rapport à l'autre et commandés de telle manière que les boîtes et/ou les ébauches de boîtes et/ou les autres récipients puissent être transférés le long de l'axe de remise et/ou de reprise (U) entre les dispositifs de transfert, en direction verticale, en particulier de bas en haut, ou en variante sous un certain angle par rapport à une verticale, en particulier sous un angle compris entre 10° et 170°, de préférence entre 20° et 160°.

12. Procédé de remise ou de reprise de boîtes ou d'ébauches de boîtes ou d'autres récipients, en particulier à l'aide d'un dispositif de transfert (1) selon l'une quelconque des revendications 1 à 9 et/ou avec un système de transfert selon une des revendications 10 ou 11, dans lequel on déplace au moins une boîte, une ébauche de boîte ou un autre récipient sous un certain angle, de préférence perpendiculairement à une trajectoire de transport (T) le long d'un axe de remise et/ou de reprise (U), dans lequel on déplace la boîte, l'ébauche de boîte ou l'autre récipient pendant la remise plus loin le long de la trajectoire de transport (T), et dans lequel on opère le déplacement de la boîte, de l'ébauche de boîte ou du récipient le long de l'axe de remise et/ou de reprise (U), au moins localement, de préférence sur toute la section de déplacement, en même temps qu'au moins un élément d'aspiration (3) présentant une ouverture d'aspiration (4), **caractérisé en ce que** le déplacement de l'ouverture d'aspiration en même temps que la boîte, l'ébauche de boîte ou l'autre récipient aspiré(e) le long de l'axe de remise et/ou de reprise (U) est provoqué exclusivement par une déformation réversible, causée de préférence par l'effet d'aspiration de la source de dépression, des éléments d'aspiration (3) réalisés en préférence en forme de soufflets pliants, et **en ce qu'**une course de remise pour les boîtes, les ébauches de boîtes ou les autres récipients, causée exclusivement par déformation des éléments d'aspiration, vaut au moins 1 mm.

13. Procédé selon la revendication 12, **caractérisé en ce que** la boîte, l'ébauche de boîte ou le récipient repose, dans une position rentrée de l'élément d'aspiration (3), sur un logement (2) d'un premier dispositif de transfert (1) et/ou **en ce que** la boîte, l'ébauche de boîte ou le récipient repose, dans une position sortie de l'élément d'aspiration (3), sur un logement de boîte (2) d'un (autre) deuxième dispositif de transfert (1).

14. Procédé selon la revendication 13, **caractérisé en ce qu'**au moins pendant un instant, au moins deux éléments d'aspiration (3) de deux dispositifs de transfert sont appliqués sur la boîte, sur l'ébauche de boîte ou sur l'autre récipient, en particulier en deux positions diamétralement opposées.
